# EUROPÄISCHE PATENTSCHRIFT

(11) **EP 2 291 592 B1**
(45) Veröffentlichungstag und Bekanntmachung des Hinweises auf die Patenterteilung: **18.05.2016**
(21) Anmeldenummer: 08773499.2
(22) Anmeldetag: 18.06.2008
(51) Int. Cl.: F16L 33/025, F16L 33/035

(54) **SCHLAUCHKLEMME**
HOSE CLAMPS
COLLIER À TUYAU

(43) Veröffentlichungstag der Anmeldung: 09.03.2011
(73) Patentinhaber: Oetiker Schweiz AG, 8810 Horgen (CH)
(72) Erfinder: MEIER, Ulrich, CH-8820 Wädenswil (CH); HÄNSLI, Willi, 8810 Horgen (CH)
(74) Vertreter: Strehl Schübel-Hopf & Partner
(86) Internationale Anmeldenummer: PCT/EP2008/004909
(87) Internationale Veröffentlichungsnummer: WO 2009/152832

(56) Entgegenhaltungen:
- US-A- 4 517 708
- US-A- 5 177 836
- US-A1- 2003 101 544
- US-A1- 2007 186 387

## Beschreibung

### Stand der Technik

Aus US 4,299,012 oder US 4,517,708 ist eine Schlauchklemme mit den im ersten Teil des Anspruchs 1 angegebenen Merkmalen bekannt. Diese Schlauchklemme hat sich wegen der Tatsache, dass ihre Innenfläche im gespannten Zustand frei von Lücken und Stufen ist und daher den Schlauch an sämtlichen Stellen seines Umfangs abstützt, auch zur Befestigung dünner, harter Schläuche an Rohrnippeln bewährt.

Zur Verbindung des äußeren Bandendes mit dem inneren Bandbereich weist die bekannte Schlauchklemme einen auf dem inneren Bandbereich angeordneten Führungshaken und mindestens einen Stütz- oder Haltehaken auf. Im geschlossenen Zustand greifen Führungshaken und Haltehaken jeweils in Durchbrüche ein, die im äußeren Bandbereich ausgebildet sind.

Bei den zunehmend dünner und unelastischer werdenden Schläuchen und den entsprechend erforderlichen steigenden Spannkräften stellt die Hakenverbindung eine Schwachstelle dar. Es hat sich gezeigt, dass sich der der Spanneinrichtung, etwa einem sogenannten "Oetiker-Ohr", benachbarte Durchbruch bei zu hohen Kräften längt und letzten Endes reißt. Diesem Problem lässt sich durch Verwendung eines hochwertigeren, elastischeren Stahls begegnen, was aber zu höheren Kosten führt.

### Abriss der Erfindung

Der Erfindung liegt die generelle Aufgabe zugrunde, Nachteile, wie sie bei vergleichbaren Schlauchklemmen nach dem Stand der Technik vorhanden sind, mindestens teilweise zu beseitigen. Eine speziellere Aufgabe kann darin gesehen werden, die Hakenverbindung einer Schlauchklemme insbesondere bezüglich ihrer Festigkeit zu verbessern.

Die Lösung dieser Aufgabe gelingt mit der in Anspruch 1 gekennzeichneten Erfindung. Danach ist die Aufnahme für den Haltehaken nicht mehr als Durchbruch oder Fenster, sondern als aus dem Bandmaterial kalt verformte allseitig geschlossene Ausprägung ausgebildet, die aufgrund ihrer geschlossenen Form wesentlich höhere Kräfte aufnehmen kann. Um eine Verankerung des Haltehakens in der Halteaufnahme zu erreichen, bildet deren Innenfläche in einem Stützbereich einen Winkel von mindestens 90° mit der Bandoberfläche. In diesem Stützbereich kann sich der Haltehaken mit einer Nase einhaken. Die geschlossene Form der Halteaufnahme hat den zusätzlichen Vorteil, dass der Haltehaken nicht nach außen vorspringt und keine Verletzungsgefahr darstellt.

In der Weiterbildung der Erfindung nach Anspruch 2 ist auch der Haltehaken selbst durch Kaltverformung aus dem Bandmaterial herausgeprägt und nur im Bereich seiner Nase herausgeschnitten. Bei dieser Formgebung weist auch der Haltehaken hohe Festigkeit auf.

Die Gestaltung nach Anspruch 3 ist insofern zweckmäßig, als sie bewirkt, dass beim Schließen der Schlauchklemme die Nase des Haltehakens in die gewünschte Stellung an der Stützfläche der Halteaufnahme gelangt

In der Ausgestaltung der Erfindung nach den Ansprüchen 4 und 5 sind eine ähnliche Formgebung und eine ähnliche Haltbarkeit auch bei dem Führungshaken und der Führungsaufnahme gegeben, wobei die Führungsaufnahme allerdings eine Öffnung zum Durchtritt einer an dem Führungshaken vorgesehenen Spitze aufweist. Die Spitze, die vorzugsweise durch einen L-förmigen Schnitt in dem Bandmaterial erzeugt wird, bewirkt eine gegenseitige Zentrierung der beiden Bandenden beim Einhängen und hält den Haltehaken auch im ungespannten Zustand der Schlauchklemme in Eingriff mit der Halteaufnahme.

In der Gestaltung nach Anspruch 6 verläuft die Spitze des Führungshakens im wesentlichen parallel zur Bandoberfläche und überlappt im eingehängten Zustand das an die Öffnung der Führungsaufnahme angrenzende Bandmaterial. Bei dieser Gestaltung lässt sich der geschlossene Zustand der Klemme durch einen Schlag auf die Führungsaufnahme fixieren. Diese Art der Fixierung ist einfacher als das Umlegen eines durch einen Führungsschlitz hindurch gesteckten lappenartigen Führungshakens nach dem Stand der Technik.

### Kurzbeschreibung der Zeichnung

Ein Ausführungsbeispiel der Erfindung wird nachstehend anhand der Zeichnung näher erläutert. Darin zeigt
Fig. 1 einen Längsschnitt durch eine Schlauchklemme im gestreckten, noch nicht zu einem Ring gebogenen Zustand,
Fig. 2 eine Draufsicht auf eine Schlauchklemme nach Fig. 1, und
Fig. 3 einen vergrößerten Längsschnitt durch einen Teil des Überlappungsbereichs der Schlauchklemme, mit der Hakenanordnung im eingehängten Zustand.

### Beschreibung eines Ausführungsbeispiels

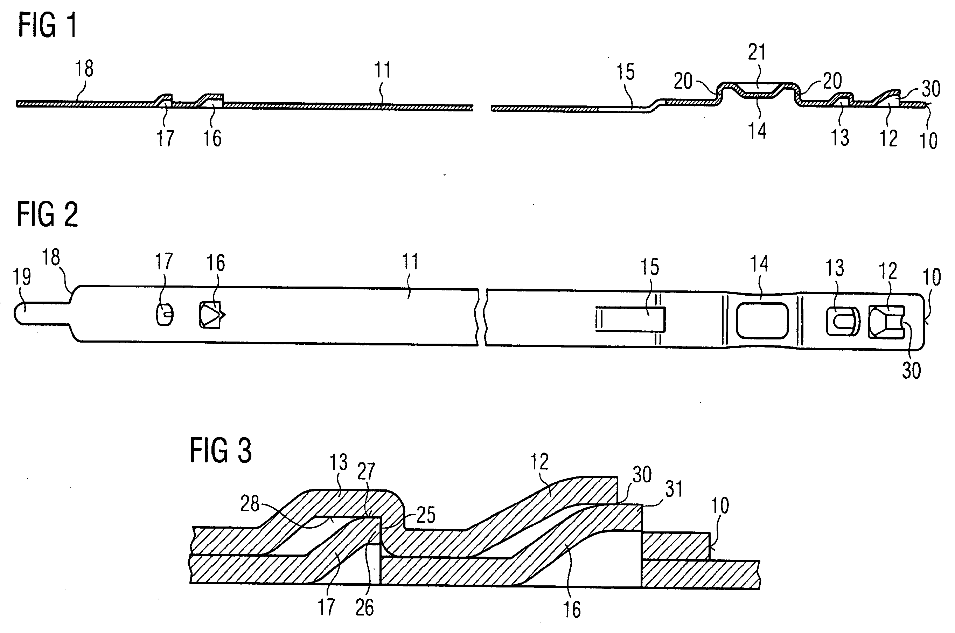

Die in der Zeichnung dargestellte Schlauchklemme weist, ausgehend von dem in Fig. 1 und 2 rechts gezeigten Bandende 10, das im geschlossenen Zustand der Schlauchklemme das außen liegt, folgende Merkmale auf, die durch Kaltverformung aus dem Stahlband **11** gebildet sind: eine Führungsaufnahme **12**, eine Halteaufnahme **13,** eine Spanneinrichtung in Form eines sogenannten "Oetiker-Ohrs" **14,** eine Zungenführung **15,** einen Führungshaken **16,** einen Haltehaken **17** und am anderen, im geschlossenen Zustand der Schlauchklemme inneren Bandende **18** eine Zunge **19.**

In dem in Fig. 3 dargestellten geschlossenen Zustand der Schlauchklemme greift der Führungshaken **16** in die Führungsaufnahme **12,** der Haltehaken **17** in die Halteaufnahme **13** und die Zunge **19** in die Zungenführung **15** ein.

Um die Klemme unter Verringerung ihres Durchmessers zu spannen, wird an den beiden von dem Band ausgehenden und im wesentlichen senkrecht zu ihm verlaufenden Schenkeln **20** des Spannohrs **14** ein (nicht gezeigtes) zangenartiges Werkzeug angesetzt, um den Abstand zwischen den mit dem Band **11** verbundenen Enden der Schenkel **20** zu verringern. Eine in dem **Spannohr 14** vorgesehene Sicke **21** verhindert, dass dabei der die Schenkel **20** verbindende Steg ausknickt.

Die Halteaufnahme **13** ist durch Kaltverformung aus dem Bandmaterial herausgeprägt und ist, wie aus Fig. 2 und 3 am besten hervorgeht, an ihrem gesamten Umfang geschlossen und hängt vollständig mit dem Bandmaterial zusammen. Die Innenfläche der Halteaufnahme **13** bildet in einem dem äußeren Bandende **10** benachbarten Stützbereich **25** einen Winkel von **90°** mit der Bandoberfläche.

Der Haltehaken **17** ist ebenfalls durch Kaltverformung aus dem Bandmaterial herausgeprägt und hängt an seinem gesamten Umfang mit Ausnahme einer vom inneren Bandende abgewandten Stelle mit dem Bandmaterial zusammen. An der besagten Stelle ist der Haltehaken **17** durch einen Schnitt vor der Verformung vom Bandmaterial getrennt, so dass eine Nase **26** entsteht, die über die Dicke des Bandes **11** hinausragt.

Die Dachfläche **27** der Nase **26** und die obere Innenfläche **28** der Halteaufnahme **13** verlaufen parallel zur Oberfläche des Bandes **11.** Dies trägt dazu bei, dass beim Schließen der Klemme die Nase **26** gegen den Stützbereich **25** geführt wird. Die beim Spannen der Klemme auftretenden, in Bandlängsrichtung wirkenden Kräfte führen dazu, dass sich die Nase **26** mit ihrer Schnittkante in den Stützbereich **25** der Halteaufnahme **13** einkrallt.

Die Führungsaufnahme **12** ist wiederum durch Kaltverformung aus dem Bandmaterial herausgeprägt, wobei sie an der dem äußeren Bandende **10** zugewandten Seite eine durch einen Schnitt im Bandmaterial gebildete Öffnung **30** aufweist, in ihrem übrigen Umfang mit dem Bandmaterial zusammenhängt.

Schließlich ist auch der Führungshaken **16** durch Kaltverformung aus dem Bandmaterial herausgeprägt und hängt außer an seiner vom inneren Bandende **18** abgewandten Seite mit dem Bandmaterial zusammen. An der vom inneren Bandende **18** abgewandten Seite ist der Führungshaken **16** durch einen von zwei Geraden gebildeten, insgesamt L-förmigen Schnitt vom Bandmaterial getrennt. Der L-förmige Schnitt weist mit seiner Spitze vom inneren Bandende **18** weg. Auf diese Weise erhält der herausgebogene Führungshaken **16** eine vom inneren Bandende abgewandte dreieckige Spitze **31**.

Die Spitze **31** des Führungshakens **16** und die Dachfläche der Führungsaufnahme **12** verlaufen parallel zur Bandoberfläche.

Beim Schließen der Schlauchklemme und Einhängen des Führungshakens **16** in die Führungsaufnahme **12** wird die Spitze **31** durch die zur Bandoberfläche senkrecht stehende Öffnung **30** der Führungsaufnahme **12** hindurch geführt und kommt auf den an die Öffnung **30** angrenzenden Bereich des Bandes **11** lie- liegen. Auf diese Weise werden die beiden Bandenden **10**, **18** relativ zueinander zentriert und der Haltehaken **17** bereits vor dem Spannen der Schlauchklemme in der Halteaufnahme **13** gehalten.

Nach dem Schließen der Schlauchklemme wird der Eingriff zwischen dem Führungshaken **16** und der Führungsaufnahme **12** durch einen Schlag auf die Führungsaufnahme **12** fixiert. Anschließend wird die Schlauchklemme durch Verengen des Spannohres **14** um den betreffenden Gegenstand, etwa eine Nippel/ Schlauch-Verbindung, gespannt, wobei sich die Zunge **19** in der Zungenführung **15** verschiebt. Im fertig gespannten Zustand wird die zwischen den inneren Enden der Schenkel **20** des Spannohrs **14** unvermeidbare Lücke durch die volle Breite des an die Zunge **19** anschließenden inneren Bandbereichs überbrückt.

### Bezugszeichenliste

- **10**: äußeres Bandende
- **11**: Band
- **12**: Führungsaufnahme
- **13**: Halteaufnahme
- **14**: Spannohr
- **15**: Zungenführung
- **16**: Führungshaken
- **17**: Haltehaken
- **18**: inneres Bandende
- **19**: Zunge
- **20**: Schenkel von **14**
- **21**: Sicke in **14**
- **25**: Stützbereich von **13**
- **26**: Nase von **17**
- **27**: Dachfläche von **17**
- **28**: obere Innenfläche von **13**
- **30**: Öffnung von **12**
- **31**: Spitze von **16**

## Patentansprüche

1. Schlauchklemme aus einem Band (**11**) mit einander überlappenden Bandenden (**10**, **18**) mit
einem auf dem inneren Bandbereich angeordneten Führungshaken (**16**) zum Eingriff in eine nahe dem äußeren Bandende (**10**) ausgebildete Führungsaufnahme (**12**),
einem auf dem inneren Bandbereich angeordneten und gegenüber dem Führungshaken (**16**) in Richtung des inneren Bandendes (**18**) versetzten Haltehaken (**17**) zum Eingriff in eine in dem äußeren Bandbereich ausgebildete Halteaufnahme (**13**) und
einer Spanneinrichtung (**14**) zum Verringern des Durchmessers der Schlauchklemme,
**dadurch gekennzeichnet, dass**
die Halteaufnahme (**13**) eine aus dem Bandmaterial geformte allseitig geschlossene Ausprägung ist, deren Innenfläche in einem dem äußeren Bandende (**10**) benachbarten Stützbereich (**25**) einen Winkel von mindestens 90° mit der Bandoberfläche bildet, und
der Haltehaken (**17**) eine vom inneren Bandende (**18**) weg weisende Nase (26) zum Eingriff mit dem Stützbereich (**25**) der Halteaufnahme (**13**) hat.

2. Schlauchklemme nach Anspruch 1, wobei der Haltehaken (**17**) eine aus dem Bandmaterial geformte, nur im Bereich der Nase (**26**) ausgeschnittene Ausprägung ist.

3. Schlauchklemme nach Anspruch 1 oder 2, wobei die Dachfläche (**27**) des Haltehakens (**17**) und die obere Innenfläche (**28**) der Halteaufnahme (**13**) parallel zur Bandoberfläche verlaufen.

4. Schlauchklemme nach einem der Ansprüche 1 bis 3, wobei die Führungsaufnahme (**12**) eine aus dem Bandmaterial geformte Ausprägung mit einer dem äußeren Bandende (**10**) zugewandten, im wesentlichen senkrecht zur Bandoberfläche verlaufenden Öffnung (**30**) und der Führungshaken (**16**) eine aus dem Bandmaterial geformte Ausprägung mit einer zum äußeren Bandende (**18**) weisenden Spitze (**31**) zum Durchtritt durch die Öffnung (**30**) der Führungsaufnahme (**12**) ist.

5. Schlauchklemme aus einem Band mit einander überlappenden Bandenden (**10**, **18**) mit
einem auf dem inneren Bandbereich angeordneten Führungshaken (**16**) zum Eingriff in eine nahe dem äußeren Bandende (**10**) ausgebildete Führungsaufnahme (**12**),
einem auf dem inneren Bandbereich angeordneten und gegenüber dem Führungshaken (**16**) in Richtung des inneren Bandendes (**18**) versetzten Haltehaken (**17**) zum Eingriff in eine in dem äußeren Bandbereich ausgebildete Halteaufnahme (**13**) und
einer Spanneinrichtung (**14**) zum Verringern des Durchmessers der Schlauchklemme,
**dadurch gekennzeichnet, dass**
die Führungsaufnahme (**12**) eine aus dem Bandmaterial geformte Ausprägung mit einer dem äußeren Bandende (**10**) zugewandten, im wesentlichen senkrecht zur Bandoberfläche verlaufenden Öffnung (**30**) ist
und der Führungshaken (**16**) eine aus dem Bandmaterial geformte Ausprägung mit einer zum äußeren Bandende (**10**) weisenden Spitze (**31**) zum Durchtritt durch die Öffnung (**30**) der Führungsaufnahme (**12**) ist.

6. Schlauchklemme nach Anspruch 4 oder 5, wobei die Spitze (**31**) des Führungshakens (**16**) im wesentlichen parallel zur Bandoberfläche verläuft und im geschlossenen Zustand der Schlauchklemme einen an die Öffnung (**30**) der Führungsaufnahme (**12**) angrenzenden Bereich des Bandes (**11**) überlappt.

7. Schlauchklemme nach einem der Ansprüche 4 bis 6, wobei die Spitze (**31**) des Führungshakens (**16**) durch einen L-förmigen Schnitt in dem Bandmaterial erzeugt ist.

## Claims

1. A hose clamp formed of a band (**11**) with mutually overlapping band ends (**10**, **18**), comprising:
a guide hook (**16**) disposed on the inner band portion for engagement with a guide hook receiving means (**12**) formed near the outer band end (**10**),
a support hook (**17**) disposed on the inner band portion and spaced from the guide hook (**16**) toward the inner band end (**18**) for engaging a support hook receiving means (**13**) formed in the outer band portion, and
tightening means (**14**) for reducing the diameter of the hose clamp,
**characterised in that**
the support hook receiving means (**13**) is an embossment formed from the band material and closed on all sides, the inner surface of the support hook receiving means (**13**) having a support portion (**25**) adjacent to the outer band end (**10**), the support portion (**25**) forming an angle of at least 90° with the band surface, and
the support hook (**17**) has a nose (**26**) pointing away from the inner band end (**18**) for engaging the support portion (**25**) of the support hook receiving means (**13**).

2. The hose clamp of claim 1 wherein the support hook (**17**) is an embossment formed from the band material and being cut-out only within the area of the nose (**26**).

3. The hose clamp of claim 1 or 2 wherein the roof surface (**27**) of the support hook (**17**) and the upper inner surface (**28**) of the support hook receiving means (**13**) extend parallel to the band surface.

4. The hose clamp of any of claims 1 to 3 wherein the guide hook receiving means (**12**) is an embossment formed from the band material and having an opening (**30**) facing the outer band end (**10**) and extending at substantially right angles with respect to the band surface, and the guide hook (**16**) is an embossment formed from the band material and having a tip (**31**) pointing toward the outer band end (**18**) for passing through the opening (**30**) of the guide hook receiving means (**12**).

5. A hose clamp formed of a band (**11**) with mutually overlapping band ends (**10**, **18**), comprising:
a guide hook (**16**) disposed on the inner band portion for engagement with a guide hook receiving means (**12**) formed near the outer band end (**10**),
a support hook (**17**) disposed on the inner band portion and spaced from the guide hook (**16**) toward the inner band end (**18**) for engaging a support hook receiving means (**13**) formed in the outer band portion, and
tightening means (**14**) for reducing the diameter of the hose clamp,
**characterised in that**
the guide hook receiving means (**12**) is an embossment formed from the band material and having an opening facing the outer band end (**10**) and extending at substantially right angles with respect to the band surface, and the guide hook (**16**) is an embossment formed form the band material and having a tip (**31**) pointing toward the outer band end (**10**) for passing through the opening (**30**) of the guide hook receiving means (**12**).

6. The hose clamp of claim 4 or 5 wherein the tip (**31**) of the guide hook (**16**) extends substantially parallel to the band surface and, in the closed condition of the hose clamp, overlaps a portion of the band (**11**) adjacent to the opening (**30**) of the guide hook receiving means (**12**).

7. The hose clamp of any of claims 4 to 6 wherein the tip (**31**) of the guide hook (**16**) is formed by an L-shaped cut in the band material.

## Revendications

1. Collier de serrage pour tuyau formé d'une bande (11) ayant des extrémités de bande se chevauchant mutuellement (10, 18), comportant :
un crochet de guidage (16) disposé sur la zone de bande intérieure pour venir en prise dans un logement de réception de crochet de guidage (12) formé près de l'extrémité de bande extérieure (10),
un crochet de support (17) disposé sur la zone de bande intérieure et décalé par rapport au crochet de guidage (16) en direction de l'extrémité de bande intérieure (18) pour venir en prise dans un logement de réception de crochet de support (13) formé dans la zone de bande extérieure et
des moyens de serrage (14) pour réduire le diamètre du collier de serrage pour tuyau,
**caractérisé en ce que**
le logement de réception de crochet de support (13) est un bossage fermé de tous les côtés et formé à partir du matériau de bande, dont la surface intérieure forme un angle d'au moins 90° par rapport à la surface de bande dans une zone de support (25) voisine de l'extrémité de bande extérieure (10), et
le crochet de support (17) a un nez (26) s'éloignant de l'extrémité de bande intérieure (18) pour venir en prise avec la zone de support (25) du logement de réception de crochet de support (13).

2. Collier de serrage pour tuyau selon la revendication 1, dans lequel le crochet de support (17) est un bossage formé à partir du matériau de bande et uniquement taillé dans la zone du nez (26).

3. Collier de serrage pour tuyau selon la revendication 1 ou 2, dans lequel la face de toit (27) du crochet de support (17) et la surface intérieure supérieure (28) du logement de réception de support (13) s'étendent parallèlement à la surface de bande.

4. Collier de serrage pour tuyau selon l'une des revendications 1 à 3, dans lequel le logement de réception de crochet de guidage (12) est un bossage formé à partir du matériau de bande avec une ouverture (30) dirigée vers l'extrémité de bande extérieure (10) et s'étendant de manière sensiblement perpendiculaire à la surface de bande, et le crochet de guidage (16) est un bossage formé à partir du matériau de bande avec une pointe (31) dirigée vers l'extrémité de bande extérieure (18) pour passer à travers l'ouverture (30) du logement de réception de crochet de guidage (12).

5. Collier de serrage pour tuyau formé d'une bande ayant des extrémités de bande se chevauchant mutuellement (10, 18), comportant :
un crochet de guidage (16) disposé sur la zone de bande intérieure pour venir en prise dans un logement de réception de crochet de guidage (12) formé près de l'extrémité de bande extérieure (10),
un crochet de support (17) disposé sur la zone de bande intérieure et décalé par rapport au crochet de guidage (16) en direction de l'extrémité de bande intérieure (18) pour venir en prise dans un logement de réception de crochet de support (13) formé dans la zone de bande extérieure et
des moyens de serrage (14) pour réduire le diamètre du collier de serrage pour tuyau,
**caractérisé en ce que**
le logement de réception de crochet de guidage (12) est un bossage formé à partir du matériau de bande avec une ouverture (30) dirigée vers l'extrémité de bande extérieure (10), de manière sensiblement perpendiculaire à la surface de bande,
et le crochet de guidage (16) est un bossage formé à partir du matériau de bande avec une pointe (31) dirigée vers l'extrémité de bande extérieure (10) pour passer à travers l'ouverture (30) du logement de réception de crochet de guidage (12).

6. Collier de serrage pour tuyau selon la revendication 4 ou 5, dans lequel la pointe (31) du crochet de guidage (16) s'étend de manière sensiblement parallèle à la surface de bande et chevauche, lorsque le collier pour tuyau est à l'état fermé, une zone de la bande (11) contigüe à l'ouverture (30) du logement de réception de crochet de guidage (12).

7. Collier de serrage pour tuyau selon l'une des revendications 4 à 6, dans lequel la pointe (31) du crochet de guidage (16) est produite par une découpe en forme de L dans le matériau de bande.
